(19) Europäisches Patentamt / European Patent Office / Office européen des brevets

(11) **EP 2 902 797 B1**

(12) **FASCICULE DE BREVET EUROPEEN**

(45) Date de publication et mention de la délivrance du brevet:
**21.07.2021 Bulletin 2021/29**

(21) Numéro de dépôt: **15153114.2**

(22) Date de dépôt: **29.01.2015**

(51) Int Cl.:
*G01S 5/00* *(2006.01)*   *B64G 1/10* *(2006.01)*
*G01S 5/02* *(2010.01)*   *B64G 1/24* *(2006.01)*
*B64G 1/36* *(2006.01)*   *G01S 3/46* *(2006.01)*
*G01S 5/14* *(2006.01)*

(54) **Procédé et système radiofréquence de détermination, par couple d'engins spatiaux, de la position angulaire relative entre plusieurs engins spatiaux distants**

Funkfrequenzverfahren und -system zur Bestimmung, durch den Drehmoment von Raumflugkörpern, der relativen Winkelposition von mehreren entfernten Raumflugkörpern

Radio-frequency method and system for determining, using spacecraft torque, the relative angular position between a plurality of remote spacecraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2014 FR 1400257**

(43) Date de publication de la demande:
**05.08.2015 Bulletin 2015/32**

(73) Titulaire: **Thales**
**92400 Courbevoie (FR)**

(72) Inventeurs:
• **Thevenet, Jean-Baptiste**
**31500 TOULOUSE (FR)**
• **Mehlen, Christian**
**26800 ETOILE SUR RHÔNE (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 1 813 957    US-A- 6 072 433**
**US-B1- 6 866 232**

• **THEVENET J-B ET AL: "A generic Radio-Frequency Subsystem for high-altitude Formation-Flying missions", 3RD INTERNATIONAL SYMPOSIUM ON FORMATION FLYING, MISSIONS AND TECHNOLOGIES, ESA-ESTEC; 20080423 TO 20080424; NOORDWIJK, NL IN: EUROPEAN SPACE AGENCY, (SPECIAL PUBLICATION) ESA SP; 654; [REPORT ON THE ACTIVITIES OF THE RESEARCH AND SCIENTIFIC SUPPORT, 23 avril 2008 (2008-04-23), pages 1-6, XP008173160, ISBN: 978-92-9221-218-6**
• **COLMENAREJO P ET AL: "Low-cost relative navigation sensing: GNSS-like devices hosted on deployed tethers", ACTA ASTRONAUTICA, PERGAMON PRESS, ELMSFORD, GB, vol. 59, no. 8-11, 1 octobre 2006 (2006-10-01), pages 873-881, XP027930693, ISSN: 0094-5765 [extrait le 2006-10-01]**

**Description**

La présente invention concerne un procédé et un système radiofréquence de détermination, par couple d'engins spatiaux, de la position angulaire relative entre plusieurs engins spatiaux distants. Elle s'applique à toute mission de navigation qui nécessite une détermination précise, en temps réel, de la position relative entre plusieurs engins spatiaux, et en particulier au domaine des satellites en vol en formation, ou des engins en manœuvre d'accostage ou en manœuvre de rendez-vous. Chaque engin spatial peut être de tout type tel que par exemple un satellite, une station spatiale, une navette spatiale ou un engin orbiteur.

Il est connu du document EP 1 813 957 de contrôler la position relative entre deux engins spatiaux par analyse de signaux de navigation bi-fréquences reçus par chaque engin, l'utilisation de signaux bi-fréquences permettant d'obtenir des mesures angulaires non ambigües. Ce document décrit de réaliser des mesures simultanément sur les deux engins spatiaux, par exemple deux satellites, les mesures réalisées par chaque engin étant obtenue à partir de la réception de signaux bi-fréquences émis par l'autre engin. Cependant, ce procédé de mesure nécessite que les satellites soient préalablement alignés et que chaque satellite soit équipé de plusieurs chaînes de réception différentes travaillant simultanément, ce qui pose des problèmes de calibration. En effet, les différentes chaînes de mesure ne sont pas parfaitement identiques les unes par rapport aux autres et les temps de propagation des signaux peuvent varier en raison des variations de puissance et de température entre les différentes chaînes de mesure, ce qui conduit à des erreurs de mesure et à un positionnement imprécis. Pour compenser les biais inter-voies et limiter les erreurs de mesure, une chaîne de calibration dynamique comportant une boucle de mesure interne, dite d'auto-calibration, a été introduite, ce qui augmente la complexité et l'encombrement du système de mesure. En outre pour lever l'ambiguïté de phase de porteuse sur la mesure de différence de marche des signaux reçus, ce procédé nécessite un alignement préalable des satellites via un signal bi-fréquence, une première rotation de l'engin spatial autour de l'axe de l'antenne pour réduire l'ambiguïté de cycle de porteuse à l'aide d'un senseur stellaire et une rotation inverse de l'engin pour retrouver la position initiale. La complexité de l'architecture globale correspondante entraîne une masse, une consommation d'énergie et un volume difficilement compatibles des ressources de certaines plateformes opérationnelles.

Le document THEVENET J-B ET AL : "A generic Radio-Frequency Subsystem for high-altitude Formation-Flying missions", 3RD International Symposium on Formation Flying, Missions and Technologies, Noordwijk, NL; 23-25 April 2008 (ESA SP-654, June 2008) décrit aussi l'utilisation de signaux bi-fréquences.

Le document US 6866232 nécessite, d'équiper chaque engin de plusieurs émetteurs ou de plusieurs récepteurs différents, associés chacun à une antenne et une chaîne d'émission, ou de réception, dédiées.

Le document 6072433 décrit un système d'engins en formation dans lequel chaque engin est autonome et comporte un processeur.

Le document COLMENAREJO P ET AL : « Low-cost relative navigation sensing : GNSS-like devices hosted on deployed tethers », ASTA ASTRONAUTICA, PERGAMON PRESS, ELMSFORD, GB, vol.59, no. 8-11, 1 octobre 2006, pages 873-881 décrit un autre système d'engins en formation.

Le but de l'invention est de remédier aux inconvénients des solutions connues et de réaliser un procédé et un système de détermination de la position relative entre deux engins spatiaux distants plus simple, ne nécessitant pas de chaîne de mesure bi-fréquence et permettant d'obtenir une meilleure précision de mesure angulaire tout en s'affranchissant des problèmes d'ambiguïté de la mesure.

Pour cela, l'invention concerne un procédé de détermination, par couple d'engins spatiaux, de la position angulaire relative entre plusieurs engins spatiaux distants, consistant :

- à émettre séquentiellement au moins trois signaux radiofréquence à partir d'un triplet d'antennes monté sur une première face d'un premier engin spatial dit engin hôte, le triplet d'antennes étant constitué d'une antenne principale d'émission et de réception et de deux antennes secondaires d'émission,
- à recevoir les trois signaux radiofréquence sur une antenne d'émission et de réception d'un ou de plusieurs seconds engins spatiaux dits engins compagnons, à mesurer à bord de chaque engin compagnon, des différences de marche entre le signal issu de l'antenne principale et les signaux issus de chacune des deux antennes secondaires, puis à transmettre par chaque engin compagnon à l'engin hôte un signal radiofréquence contenant les mesures réalisées,
- à recevoir et à traiter à bord de l'engin hôte, le signal radiofréquence contenant les mesures transmis par chaque engin compagnon et à en déduire la position angulaire relative de chaque engin compagnon dans un repère lié à l'engin hôte.

Avantageusement, tous les signaux radiofréquence sont émis ou reçus séquentiellement par les différentes antennes des engins spatiaux, par l'intermédiaire d'un lien radiofréquence bidirectionnel de localisation et de communication inter-engins, selon une trame TDMA constituée de plusieurs fenêtres temporelles successives respectivement allouées à chaque antenne de l'engin hôte et à chaque antenne des engins compagnons pour l'émission ou la réception de signaux radiofréquence.

Avantageusement, tous les signaux radiofréquence émis ou reçus sont modulés par une porteuse ayant une fréquence F1 identique.

Avantageusement, le procédé comporte en outre une étape additionnelle destinée à réduire une ambiguïté de phase de la porteuse, consistant :

- sans alignement préalable des deux engins spatiaux, à réaliser une première rotation de l'engin hôte autour d'un axe Z parallèle à un axe de pointage des antennes du triplet, la première rotation étant réalisée dans un premier sens et ayant un angle de rotation de valeur quelconque prédéterminée,
- puis à faire l'acquisition de mesures de différences de marche, à différents instants de mesure successifs, pendant toute la durée de la rotation et à calculer des variations de différences de marche entre les instants de mesure successifs,
- aux mêmes instants de mesure successifs, à mesurer des variations d'attitude inertielle de l'engin hôte,
- à partir des variations de différences de marche et des variations d'attitude inertielle mesurées, en déduire, pour chaque couple d'engins spatiaux, une estimation de la position angulaire relative entre les engins spatiaux,
- puis à aligner, par couple, les engins spatiaux hôte et compagnon et à réaliser une deuxième rotation de l'engin hôte autour de l'axe Z, la deuxième rotation étant réalisée dans un second sens opposé au premier sens et ayant un angle de rotation de valeur quasi-identique à la première rotation et à réaliser pour chaque couple d'engins spatiaux, une nouvelle mesure non ambigüe de la position angulaire relative entre les engins spatiaux.

L'invention concerne aussi un système de détermination, par couple d'engins spatiaux, de la position angulaire relative entre deux engins spatiaux distants pour la mise en œuvre du procédé, le système comportant au moins un premier engin spatial dit engin hôte et un deuxième engin spatial dit engin compagnon. L'engin hôte comporte au moins un triplet d'antennes monté sur une première face, le triplet d'antennes étant constitué d'une antenne principale d'émission et de réception et de deux antennes secondaires d'émission, une chaîne d'émission pouvant être successivement couplée à l'émission, à chaque antenne du triplet d'antennes et une chaîne de réception pouvant être couplée à la réception, à l'antenne principale, un commutateur radiofréquence apte à sélectionner séquentiellement les différentes antennes du triplet et un dispositif de traitement destiné à déterminer une position angulaire relative entre l'engin hôte et l'engin compagnon à partir de mesures de différences de marche transmises par l'engin compagnon. L'engin compagnon comporte au moins une antenne d'émission et de réception placée sur une première face, une chaîne d'émission et une seule chaîne de réception respectivement couplées à l'antenne d'émission et de réception et un dispositif de mesure destiné à mesurer des différences de marche entre un signal radiofréquence reçu de l'antenne principale et des signaux radiofréquence reçus de chacune des deux antennes secondaires du triplet d'antennes de l'engin hôte.

Avantageusement, l'engin hôte comporte en outre un dispositif de mesure des variations d'attitude de l'engin hôte.

Avantageusement, chaque engin spatial hôte et compagnon comporte en outre une deuxième antenne d'émission et de réception placée sur une deuxième face à l'opposé de la première face de l'engin spatial correspondant.

Avantageusement, chaque engin spatial hôte et compagnon comporte un triplet d'antennes, un dispositif de traitement et un dispositif de mesure de différence de marche.

Avantageusement, le système comporte en outre, à bord de chaque engin spatial hôte et compagnon, des moyens de mesure du niveau de puissance des signaux reçus par chaque antenne de réception et des moyens de sélection de l'antenne de réception ayant le plus grand niveau de puissance.

D'autres particularités et avantages de l'invention apparaîtront clairement dans la suite de la description donnée à titre d'exemple purement illustratif et non limitatif, en référence aux dessins schématiques annexés qui représentent :

- figure 1: un schéma d'un ensemble de deux engins spatiaux distants, appelés respectivement engin hôte et engin compagnon, selon l'invention;
- figure 2 : un schéma synoptique d'un exemple d'architecture d'un terminal radiofréquence à bord d'un engin hôte, selon l'invention ;
- figure 3 : un exemple de positionnement de trois antennes d'un triplet, sur une face d'un engin hôte, selon l'invention;
- figure 4 : un schéma synoptique d'un exemple d'architecture d'un terminal radiofréquence à bord d'un engin compagnon, selon l'invention ;
- figures 5a, 5b: deux schémas illustrant la différence de marche entre deux signaux émis par deux antennes principale et secondaire d'un triplet d'antennes d'un engin hôte et les positions angulaires relatives de deux engins hôte et compagnon correspondants, selon l'invention ;
- figure 5c : un schéma synoptique illustrant le procédé de mesure de la position angulaire relative entre deux engins spatiaux, hôte et compagnon, selon l'invention ;
- figure 6 : un schéma illustrant les angles élévation et azimut définissant la position angulaire relative d'un engin compagnon dans un repère X, Y, Z lié à l'engin hôte, selon l'invention ;

- figure 7a : un exemple illustrant une rotation d'un engin hôte destinée à permettre de réduire une ambiguïté de phase de porteuse sur les mesures de différence de marche, selon l'invention ;
- figure 7b : un schéma synoptique illustrant les étapes de réduction d'ambiguïté de la phase de la porteuse, selon l'invention ;
- figure 8 : un exemple illustrant deux engins spatiaux distants, respectivement hôte et compagnon, chaque engin spatial comportant deux antennes d'émission et de réception sur deux faces opposées, selon un mode de réalisation de l'invention ;
- figure 9a : un exemple de configuration de deux engins spatiaux distants équipés d'un triplet d'antennes sur une première face et d'une antenne d'émission et de réception Rx/Tx sur une deuxième face opposée, selon un autre mode particulier de réalisation de l'invention;
- figure 9b : un exemple de trame TDMA applicable au cas de la figure 9a, pour deux engins spatiaux distants équipés d'un triplet d'antennes sur une première face et d'une antenne Rx/Tx sur une deuxième face opposée, selon un mode particulier de réalisation de l'invention.

Selon l'invention, la mesure de la position relative entre deux engins spatiaux distants 10, 20 est réalisée à bord de l'un des deux engins spatiaux, appelé engin hôte 10, l'autre engin spatial étant appelé engin compagnon 20. On entend par "position angulaire relative", les deux estimations des angles d'azimut et d'élévation de chaque engin compagnon dans un repère lié à l'engin hôte, le repère étant défini par un triplet d'antennes montées sur une face de l'engin hôte. Dans le cas où il y a plusieurs engins compagnons dans la formation, le procédé de l'invention s'applique à chaque couple d'engins spatiaux constitué d'un engin hôte et d'un engin compagnon.

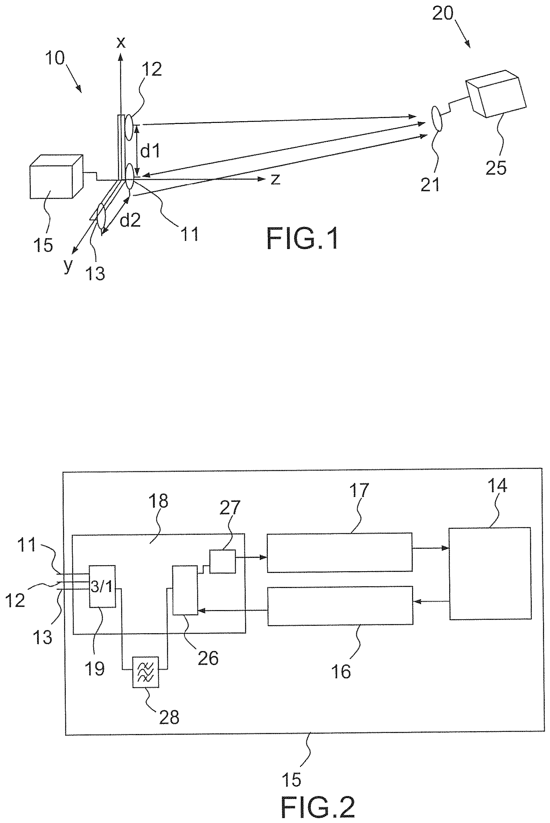

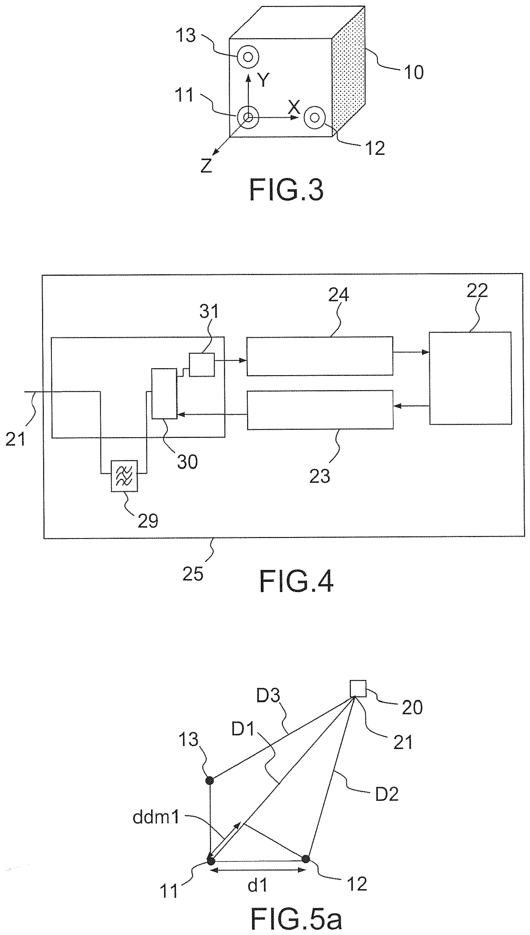

Comme représenté sur l'exemple schématique de la figure 1, l'engin hôte 10 et l'engin compagnon 20 comportent chacun un terminal radiofréquence 15, 25 connecté à des antennes. Pour estimer la position angulaire d'un ou de plusieurs engins compagnons distants dans un référentiel lié à l'engin hôte, comme représenté sur le schéma de la figure 2, le terminal radiofréquence 15 de l'engin hôte doit comporter un dispositif de traitement 14, une chaîne d'émission 16, une chaîne de réception 17 et au moins un ensemble de trois antennes constitué d'une antenne principale Rx/Tx 11 fonctionnant à l'émission et à la réception et de deux antennes secondaires Rx 12, 13 fonctionnant à l'émission. Les trois antennes 11, 12, 13 sont positionnées en trois endroits choisis sur l'une des faces de l'engin hôte 10, les distances d1, d2, séparant l'antenne principale Rx/Tx 11 des deux antennes secondaires Rx 12, 13 étant prédéterminées. Les trois antennes forment ainsi un triplet d'antennes, les bases des antennes 11 et 12 étant alignées selon une première direction X et les bases des antennes 11 et 13 étant alignées selon une deuxième direction Y. La chaîne d'émission et la chaîne de réception fonctionnent à une même fréquence F1 prédéterminée. La figure 3 illustre un exemple non limitatif, de positionnement des trois antennes d'un triplet d'antennes. Dans cet exemple, la base de l'antenne principale 11 et les bases des antennes 12 et 13 sont respectivement alignées selon deux directions X, Y de la face de l'engin hôte et leur direction de pointage est orientée selon un axe Z normal à la face. Les deux directions X et Y peuvent être orthogonales entre elles mais ce n'est pas indispensable. Cependant, il est préférable de s'approcher de l'orthogonalité des bases des antennes, par exemple à 20° près, pour obtenir une meilleure homogénéité des performances dans les trois dimensions de l'espace. Par contre, il est impératif que les trois antennes du triplet soient orientées vers une direction de pointage identique. L'engin hôte 10 peut comporter en outre une antenne d'émission et de réception additionnelle placée sur une deuxième face de l'engin hôte, opposée à la première face où se trouve le triplet d'antennes.

Les trois antennes du triplet de l'engin hôte, et éventuellement l'antenne d'émission/ réception additionnelle, sont séquentiellement reliées, les unes après les autres, à l'émission, à la chaîne d'émission 16. L'antenne d'émission/réception du triplet d'antennes et/ou l'antenne d'émission/réception additionnelle de l'engin hôte sont séquentiellement reliées, à la réception, à la chaîne de réception 17. L'engin hôte comporte un dispositif d'aiguillage 18 incluant un moyen de commutation radiofréquence 19 assurant la sélection séquentielle des antennes du triplet en respectant une trame TDMA définissant la succession des périodes d'émission et de réception des signaux par chacune des antennes et un filtre radiofréquence 26 assurant l'aiguillage des signaux d'émission et des signaux de réception vers la chaîne d'émission ou vers la chaîne de réception. Le moyen de commutation radiofréquence 19 permet de multiplexer les signaux radiofréquence entre la chaîne d'émission et la chaîne de réception et entre les différentes antennes. Le moyen de commutation radiofréquence 19 est relié à la chaîne d'émission et à la chaîne de réception par l'intermédiaire d'un filtre d'entrée/sortie 28 connecté au filtre d'aiguillage 26 des signaux d'émission et des signaux de réception. En outre, un atténuateur 27 est connecté entre le filtre d'aiguillage 26 des signaux d'émission et de réception et la chaîne de réception 17.

Comme représenté sur la figure 4, le terminal radiofréquence de chaque engin compagnon 20 doit comporter un dispositif de mesure 22, une chaîne d'émission 23, une chaîne de réception 24 et une antenne 21 fonctionnant à l'émission Tx et à la réception Rx. La chaîne d'émission et la chaîne de réception fonctionnent à la même fréquence F1 que les chaînes d'émission et de réception de l'engin hôte. L'engin compagnon comporte en outre un filtre d'entrée/sortie 29 connecté à un filtre d'aiguillage 30 des signaux d'émission et des signaux de réception et un atténuateur 31 connecté entre le filtre d'aiguillage 30 des signaux d'émission et de réception et la chaîne de réception 24.

Selon l'invention, l'engin hôte 10 émet des signaux radiofréquence en direction de l'engin compagnon 20 sur un lien radiofréquence bidirectionnel de localisation et de communication inter-engins 33. Les signaux émis par chaque engin hôte ou par chaque engin compagnon, sont constitués par une porteuse de fréquence F1 modulée d'une part par un code pseudo-aléatoire permettant d'obtenir une mesure de pseudo-distance et d'autre part, par des données. Les terminaux radiofréquence 15, 25 de l'engin hôte et de chaque engin compagnon comportent des horloges internes non représentées, utilisées pour générer la fréquence de porteuse F1 et pour séquencer le code pseudo-aléatoire. Les horloges fournissent également des signaux d'horloge nécessaires au contrôle de l'émission et de la réception des signaux radiofréquence. Le code pseudo-aléatoire ainsi qu'un champ spécifique contenant une information de temps local ajouté aux données émises par l'un des engins spatiaux, hôte ou compagnon, et reçu par un autre engin spatial, permettent à tous les engins spatiaux de se synchroniser entre eux et de synchroniser les périodes d'émission et de réception entre les différents engins spatiaux. Selon l'invention, les signaux radiofréquence sont émis séquentiellement sous forme de trame, selon un mode d'émission TDMA (en anglais : time division multiplex access). A chaque antenne de l'engin hôte et de l'engin compagnon est attribuée une fenêtre temporelle spécifique dans la trame, la fenêtre temporelle étant dédiée à l'émission de signaux radiofréquence et, pour les antennes fonctionnant aussi à la réception, est attribuée également une fenêtre temporelle spécifique dédiée à la réception de signaux radiofréquence. L'isolation entre les signaux émis et les signaux reçus est réalisée grâce aux fenêtres temporelles différentes attribuées à l'émission et à la réception dans la trame TDMA. Cela permet d'utiliser une seule fréquence F1 d'émission et de réception pour pouvoir réaliser les mesures de position et d'implanter une seule chaîne d'émission et de réception à bord de chaque engin.

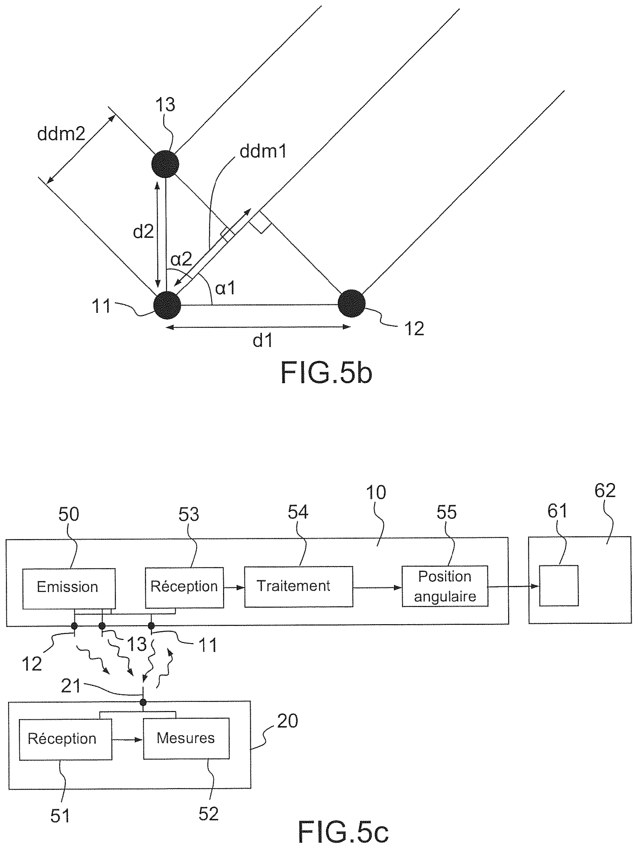

Comme représenté sur la figure 5c, dans une première étape, des signaux radiofréquence sont émis 50, séquentiellement dans des fenêtres temporelles dédiées de la trame TDMA, par chacune des trois antennes 11, 12, 13 de l'engin hôte 10. L'engin compagnon 20 reçoit 51 successivement sur son antenne 21, dans une fenêtre temporelle spécifique dédiée à la réception, les différents signaux émis par chacune des trois antennes de l'engin hôte 10. Les signaux reçus sont transmis au dispositif de mesure 22 qui mesure 52 le temps de propagation de chaque signal reçu provenant de chacune des trois antennes 11, 12, 13 de l'engin hôte 10 et en déduit des différences de marche ddm1, ddm2 entre le chemin parcouru par le signal provenant de l'antenne principale Rx/Tx 11 et le chemin parcouru par les signaux provenant de chacune des deux antennes secondaires Tx 12 et Tx 13 de l'engin hôte.

Sur les figures 5a, 5b est illustré le principe de mesure de la différence de marche ddm1, respectivement ddm2, entre le signal provenant de l'antenne principale 11 et le signal provenant d'une antenne secondaire 12, respectivement 13, les deux antennes, principale et secondaire, étant espacées d'une distance d1, respectivement d2. Lorsque les engins hôte et compagnon sont suffisamment éloignés l'un de l'autre par rapport à la distance entre l'antenne principale et chaque antenne secondaire, les signaux émis par les différentes antennes de l'engin hôte paraissent parallèles comme le montre le schéma partiel agrandi de la figure 5b. La différence de marche ddm1 est la différence de trajet D1-D2 qui existe entre des signaux provenant des deux antennes principale 11 et secondaire 12 de l'engin hôte et reçus par l'engin compagnon. De même la différence de marche ddm2 est la différence de trajet D1-D3 qui existe entre des signaux provenant des deux antennes principale 11 et secondaire 13. Chaque différence de marche ddm1, ddm2, exprimée en mètres, est directement proportionnelle à la différence de temps de propagation entre les signaux émis par l'antenne principale et les signaux émis par chacune des deux antennes secondaires de l'engin hôte et reçus par l'engin compagnon, le facteur de proportionnalité étant la vitesse de propagation de la lumière dans le vide. Chaque différence de marche ddm1, ddm2 dépend de la distance d1, séparant les deux antennes 11, 12, respectivement de la distance d2 séparant les deux antennes 11, 13, de l'engin hôte. Chaque différence de marche est déterminée par le dispositif de mesure 22 et correspond à la différence entre les mesures de pseudo-distances sur la phase de la porteuse entre les signaux émanant des deux antennes 11 et 12, et respectivement 11 et 13. Tous les signaux de mesure étant obtenus par une unique chaîne de réception à bord de l'engin compagnon 20, ils suivent tous le même chemin électrique. Cela permet de s'affranchir de l'utilisation de moyens de calibration et de supprimer les erreurs de mesure liées à l'utilisation de plusieurs chaînes de mesure différentes. En outre, la soustraction réalisée pour obtenir les mesures de différence de marche annule toutes les éventuelles erreurs liées à la chaîne de mesure à l'exception des erreurs liées aux antennes et aux moyens de commutation qui sont considérées comme stables et calibrées au sol préalablement à la mission.

Dans une deuxième étape, l'antenne 21 retransmet, via le lien radiofréquence de localisation et de communication inter-engins 33, les différences de marche ddm1, ddm2 mesurées par l'engin compagnon 20 dans un message, vers l'engin hôte 10, le message étant transmis dans la fenêtre temporelle allouée à l'émission de l'engin compagnon 20. Le message comporte en sus de la transmission des mesures de différences de marche d'autres données sous la forme d'un signal global de navigation. En pratique, le message doit inclure le champ spécifique de synchronisation TDMA, et des données concernant la sélection de l'antenne en réception, lorsqu'il existe plusieurs antennes de réception, sur la base de mesures de puissance par exemple. De plus, des mesures supplémentaires telles que les mesures de pseudo-distances, peuvent être échangées entre les antennes d'émission / réception de deux engins spatiaux, par exemple pour le calcul de la distance inter-engins et du biais de temps inter-horloge. Enfin, des données de statut et de validité des mesures peuvent compléter le message.

Dans une troisième étape, les mesures de différences de marche retransmises par l'engin compagnon 20 sont reçues 53 par l'antenne principale Rx/Tx 11 de l'engin hôte 10 puis traitées 54 par le dispositif de traitement 14. Le traitement 54 consiste, à partir des mesures de différences de marche et de la connaissance de la position des antennes de l'engin hôte dans un repère lié au triplet d'antennes 11, 12, 13, à estimer en temps quasi-réel, deux angles élévation et azimut définissant la position angulaire de l'engin compagnon dans un repère lié au triplet d'antennes 11, 12, 13 de l'engin hôte. Chaque différence de marche ddm1, ddm2 est égale au produit de la distance d1 séparant les deux antennes 11, 12, respectivement de la distance d2 séparant les deux antennes 11, 13, et du cosinus de l'angle $\alpha$1, respectivement $\alpha$2, entre la direction d'arrivée des signaux appelée axe à vue LoS (en anglais : Line-of-Sight) et la direction d'alignement des deux antennes 11, 12, respectivement 11, 13, sur la face de l'engin hôte. Les deux mesures de différence de marche ddm1, ddm2 permettent donc d'obtenir deux angles $\alpha$1, $\alpha$2 d'arrivée des signaux par rapport au repère lié aux antennes et d'en déduire la position angulaire 55 de l'engin compagnon 20 par rapport à l'engin hôte 10.

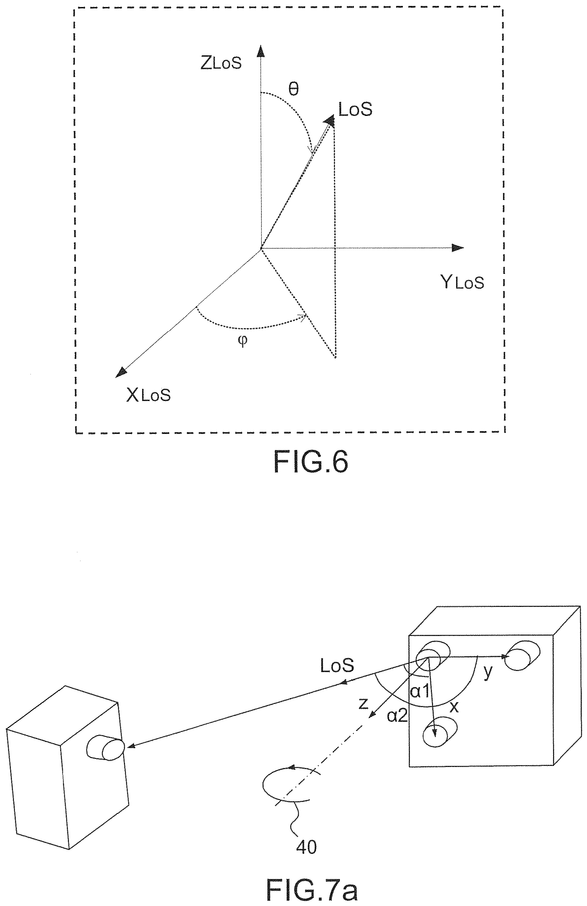

La figure 6 illustre les angles élévation et azimut définissant la position angulaire d'un engin spatial dans un repère X, Y, Z lié à l'engin hôte, le vecteur d'axe à vue LoS est le vecteur unitaire parallèle au vecteur reliant les repères des deux engins hôte et compagnon dont la position relative doit être déterminée. Dans le cas où le repère X, Y, Z correspond au repère lié aux antennes, les composantes du vecteur LoS suivant les directions X et Y sont d'abord calculées par une simple division des différences de marche ddm1, ddm2 par la longueur de la base antenne d1 ou d2 correspondante. La dernière composante suivant la direction Z est obtenue en utilisant le fait que le vecteur LoS est unitaire. L'angle d'azimut $\varphi$ est ensuite obtenu par une opération de type arc-tangente à quatre quadrants sur le couple de directions Y, X. L'angle d'élévation $\theta$ est obtenu par une opération de type arc-cosinus sur la composante selon la direction Z.

Enfin, si les horloges ne sont a priori pas synchronisées entre les engins hôte et compagnon, il peut être nécessaire d'effectuer un transfert de temps entre les deux engins spatiaux. Pour cela, on peut utiliser une technique bien connue de type « two-way », consistant à combiner les mesures de pseudo-distances aller et retour entre un couple d'antennes d'émission/ réception pour connaître l'écart de temps entre les horloges des deux engins spatiaux afin de pouvoir restituer la mesure angulaire dans le temps local de l'engin hôte, au lieu de celui de l'engin compagnon dans lequel les mesures brutes sont réalisées. En outre, le dispositif de traitement 14 peut également déterminer la distance inter-engin à partir des mêmes mesures de pseudo-distances.

La position angulaire obtenue peut ensuite être fournie à un filtre de navigation 61 intégré dans un module de Guidage, Navigation et Contrôle GNC 62 d'un calculateur central de bord de l'engin hôte, non représenté, pour qu'il puisse calculer en temps réel, des manœuvres de navigation à effectuer pour corriger sa position ou son orientation par rapport à l'engin compagnon si besoin. Les deux engins hôte et compagnon sont considérés comme alignés lorsque les angles d'azimut $\alpha$ et d'élévation $\theta$ sont nuls.

En raison du besoin d'échanger les données entre les engins spatiaux, de l'asynchronisme des horloges des engins spatiaux et des taches logicielles réalisées à basse cadence, typiquement 1 Hz, il existe un temps de latence de une à deux secondes entre l'instant où est réalisée la mesure de différence de marche par l'engin compagnon, et l'instant où la position angulaire est disponible par l'engin hôte pour la transmission vers le GNC 62. Autrement dit on fournit au GNC 62 une position très précise mais applicable à une date passée. Cela n'est pas un problème car les mesures angulaires sont datées précisément et accompagnées de mesures de vitesse angulaires, obtenues en mesurant la variation des différences de phase de porteuse inter-antennes, ce qui permet une re-synchronisation précise des mesures réalisées, au temps courant.

Indépendamment du temps de latence, les différences de marche mesurées sont a priori ambiguës lorsque la distance séparant l'antenne principale de chacune des deux antennes secondaires est supérieure à la demi-longueur d'onde du signal émis, ce qui peut correspondre à un cas typique, en bande S notamment, car la précision angulaire est meilleure lorsque la distance qui sépare les antennes augmente. Les mesures contiennent donc un nombre entier inconnu de cycles de phase de porteuse qui peut être différent pour chacun des couples d'antennes principale 11 et secondaire 12, 13 de l'engin hôte, suivant la position angulaire relative des engins et la longueur d1, d2, des bases-antennes. En l'absence d'un traitement spécifique, les calculs des angles d'azimut et d'élévation sont par conséquent erronés.

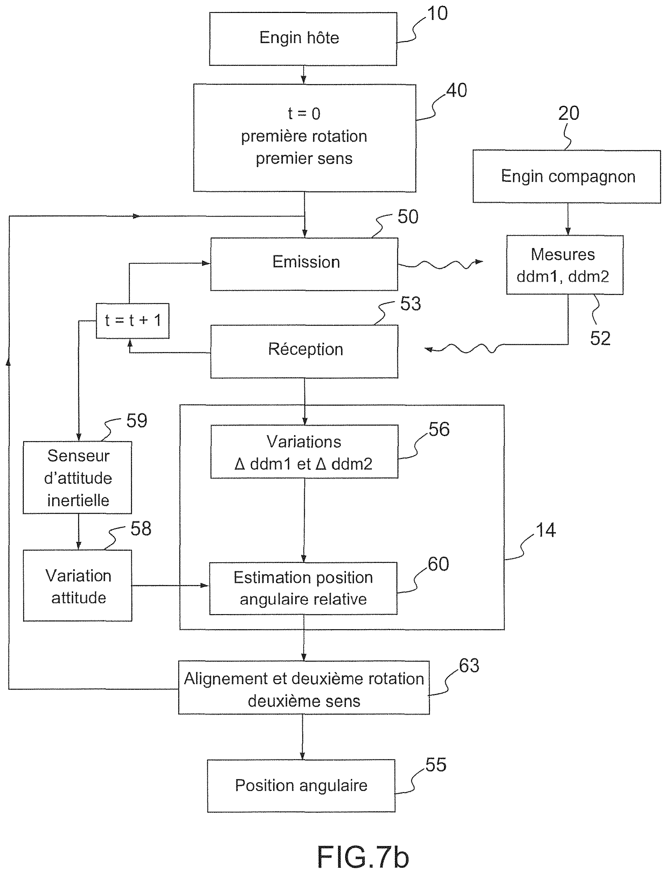

Pour réduire l'ambiguïté de phase de la porteuse sur les mesures de différence de marche, l'invention comporte en outre une étape préalable consistant, avant de produire toute mesure de différence de marche non-ambiguë, à réaliser une première rotation 40 de l'engin hôte autour de l'axe Z parallèle à l'axe de pointage des antennes comme représenté sur l'exemple de la figure 7a. La première rotation 40 est réalisée dans un premier sens, par exemple dans le sens des aiguilles d'une montre, et a un angle de rotation dont l'amplitude a été fixée par avance à partir de critères propres à la mission : l'amplitude doit être suffisamment grande pour pouvoir réaliser la première mesure d'axe à vue non ambiguë, mais doit rester compatible de la capacité de rotation de l'engin hôte et des éventuelles contraintes de sa charge utile. Aucune condition d'alignement préalable des deux engins hôte et compagnon n'est nécessaire, il est juste nécessaire que le triplet d'antennes de l'engin hôte soit en visibilité radiofréquence d'une antenne Rx/Tx de l'engin compagnon. La première rotation 40 est réalisée de manière autonome ou par télécommande depuis le sol suivant les contraintes de la mission, mais dans tous les cas à la suite d'un processus d'acquisition et de poursuite des signaux permettant aux deux engins spatiaux de se synchroniser. En d'autres termes, la rotation commence lorsque le lien bidirectionnel 33 entre deux engins spatiaux est établi et que des mesures de différence de marche, alors ambiguës, sont disponibles. Comme représenté sur le schéma synoptique de la figure 7b, pendant la rotation de l'engin hôte, l'engin hôte émet 50 un signal sur ses différentes antennes d'émission, dans les fenêtres temporelles qui lui sont assignées par la trame TDMA. L'engin compagnon 20 fait l'acquisition des signaux dans les fenêtres de temps qui lui sont allouées et réalise 52 des mesures de différences de marche, à différents instants t de mesure successifs, les instants de mesure se succédant en fonction de la période élémentaire du terminal, typiquement 1 seconde entre deux instants de mesure successifs t et t+1, puis transmet les mesures réalisées sur le lien bidirectionnel inter-engins 33, à l'engin hôte 10. A réception 53 des mesures, pendant toute la durée de la rotation, le dispositif de traitement 14 de l'engin hôte calcule les variations 56 des différences de marche mesurées entre les instants de mesure successifs et combine ces variations de différences de marche avec des mesures 58 de variations d'attitude inertielle de l'engin hôte réalisées aux mêmes instants t de mesure par un senseur d'attitude inertielle 59, par exemple par un senseur stellaire ou tout autre dispositif de mesure d'attitude inertielle à haute précision, placé à bord de l'engin hôte. Ceci correspond donc à un mode de fonctionnement particulier du dispositif de l'engin hôte qui doit être informé par le GNC 62 via un moyen spécifique, par exemple une télécommande, du démarrage de la rotation.

La combinaison des mesures radiofréquence et des mesures inertielles permet d'obtenir, de manière non-ambiguë, les coordonnées du vecteur axe à vue LoS dans le repère X, Y, Z formé par les deux couples d'antennes, principale et secondaire 11, 12 et 11, 13, de l'engin hôte :

$$X_{LOS} = \frac{-\Delta ddm_1}{2.d_1} + \frac{-\sin\psi.\Delta ddm_2}{2.(1-\cos\psi).d_2}$$

$$Y_{LOS} = \frac{\sin\psi.\Delta ddm_1}{2.(1-\cos\psi).d_1} + \frac{-\Delta ddm_2}{2.d_2}$$

En notant $X_{LOS}$ et $Y_{LOS}$ les coordonnées du vecteur axe à vue LoS à un instant initial de la première rotation 40, $\psi$ l'angle de la rotation effectuée entre l'instant initial et l'instant final de la première rotation et mesuré par le senseur d'attitude inertielle 59, $\Delta ddm_1$ et $\Delta ddm_2$ les variations de différences de marche mesurées sur les deux bases d'antennes de longueurs d1 et d2 entre les deux instants initial et final. Ces coordonnées du vecteur axe à vue LOS correspondent à une estimation 60 de la position angulaire relative entre l'engin hôte et l'engin compagnon.

A noter que les équations ci-dessus sont données pour un triplet d'antennes formant deux bases d'antennes orthogonales, et pour une distance inter-engins très grande devant les longueurs d1 et d2 des bases d'antennes. L'homme de l'art sait adapter ces équations dans le cas où les deux bases d'antennes ne sont pas perpendiculaires, ou pour prendre en compte l'effet de parallaxe lorsque la distance inter-engins n'est pas très grande devant les longueurs d1 et d2 des bases d'antennes.

Une fois qu'on a obtenu une première mesure non ambiguë des coordonnées $X_{LOS}$ et $Y_{LOS}$, le système radiofréquence entretient la mesure courante des coordonnées $X_{LOS}$ et $Y_{LOS}$ en mesurant la variation des différences de phase de porteuse inter-antennes de manière continue, non ambiguë et précise. En final la précision de la mesure courante est essentiellement celle de la mesure initiale.

L'erreur sur la mesure initiale ainsi obtenue contient plusieurs types de composantes d'erreur incluant des composantes d'erreur propres à l'instrumentation radiofréquence relatives aux multi-trajets causés par la réflexion des signaux et aux résidus de calibration de l'électronique d'émission et de réception, des composantes d'erreur propres à la combinaison des mesures radiofréquence et inertielles dues aux erreurs d'harmonisation entre le triplet d'antennes 11, 12, 13 et le trièdre de référence du senseur inertiel 59 et aux erreurs de mesure du senseur inertiel 59, et une composante d'erreur liée au mouvement latéral de l'engin compagnon 20 pendant la rotation.

Les deux premiers types de composantes d'erreur peuvent être réduits par des techniques et précautions d'implantation bien connues de l'homme de l'art.

La composante d'erreur liée au mouvement latéral de l'engin compagnon 20, c'est à dire son déplacement selon une direction orthogonale au vecteur axe à vue LOS, ne peut pas être complètement réduite à ce stade des opérations. Cette composante peut être pourtant significative, notamment si les actuateurs de mise en rotation de l'engin hôte ont une puissance modérée, ce qui entraine une durée longue de la première manœuvre de rotation et la possibilité d'un déplacement non négligeable de l'engin compagnon pendant cette durée. La difficulté de réduire cette composante d'erreur est due au fait que les deux engins hôte 10 et compagnon 20 ne sont pas alignés, ce qui entraine une mésestimation de la vitesse latérale, comme expliqué ci-après.

Le vecteur V représentant la vitesse relative de l'engin compagnon par rapport à l'engin hôte est la dérivée par rapport au temps t du produit D . LOS entre la distance D séparant les deux engins hôte et compagnon et le vecteur unitaire LOS, et est donné par l'équation :

$$\vec{V} = d(D.\vec{LOS})/dt = D.d\,\vec{LOS}/dt + dD/dt.\vec{LOS}$$

La vitesse latérale (ou orthoradiale) est le premier terme de cette somme :

$$\vec{V}_{lat} = D.d\,\vec{LOS}/dt$$

La mesure de la variation des différences de phase de porteuse des antennes 11, 12, 13 du triplet fournit, de manière précise et non ambiguë, les quantités dérivées des composantes du vecteur LOS dans le référentiel X, Y, Z lié aux bases des antennes 11, 12, 13 du triplet, $dX_{LOS}/dt$ et $dY_{LOS}/dt$, mais on ne dispose pas de mesure directe de $dZ_{LOS}/dt$. La connaissance de cette troisième composante est obtenue à partir de la norme du vecteur unitaire $\vec{LOS}$ dont le carré est égal à 1 suivant l'expression ci-dessous :

$$X_{LOS}{}^2 + Y_{LOS}{}^2 + Zlos^2 = 1$$

En dérivant cette égalité, on obtient les équations suivantes :

$$2X_{LOS} \cdot dX_{LOS}/dt + 2Y_{LOS} \cdot dY_{LOS}/dt + 2.Zlos \cdot dZ_{LOS}/dt = 0$$ ,

$$dZ_{LOS}/dt = -\frac{Xlos}{Zlos}.dX_{LOS}/dt - \frac{Ylos}{Zlos}.dY_{LOS}/dt$$

Cette équation montre que l'erreur sur les coordonnées $X_{LOS}$ et $Y_{LOS}$ , induite par la méconnaissance de la vitesse latérale de l'engin compagnon, entraine à son tour la méconnaissance de la vitesse latérale. Cette méconnaissance est d'autant plus faible que $X_{LOS}$ et $Y_{LOS}$ sont petits, c'est-à-dire que les deux engins spatiaux sont alignés.

Pour résoudre ce problème sans réaliser un alignement préalable des engins spatiaux via des signaux de mesure bi-fréquence, l'invention consiste à réaliser la première rotation 40 malgré le dépointage des engins spatiaux 10, 20. L'invention consiste ensuite à utiliser la mesure de position angulaire approximative obtenue à l'issue de cette première rotation pour réaliser 63 un alignement approximatif des deux engins spatiaux puis à réaliser ensuite une deuxième rotation de l'engin hôte autour de l'axe Z. La deuxième rotation est réalisée dans un deuxième sens, opposé à celui de la première rotation, par exemple dans le sens inverse des aiguilles d'une montre, l'angle de la deuxième rotation ayant approximativement la même valeur que l'angle de la première rotation. L'invention consiste ensuite à renouveler les opérations précédentes, ce qui permet de réaliser 55 une nouvelle mesure non ambiguë de la position angulaire. L'alignement approximatif des deux engins hôte et compagnon réalisé avant la deuxième rotation de l'engin hôte permet d'obtenir une mesure plus précise de la vitesse latérale entre les deux engins spatiaux et ainsi une mesure plus précise de la position angulaire relative entre les deux engins spatiaux hôte et compagnon car elle est alors corrigée du mouvement latéral subi pendant cette seconde rotation.

Il est possible d'envisager une troisième phase consistant à utiliser la nouvelle estimation de position angulaire pour affiner l'alignement des deux engins et réaliser une troisième rotation pour affiner encore la connaissance de la position angulaire. Mais cette troisième phase s'avérera inutile la plupart du temps. Par ailleurs, l'impact de la méconnaissance du déplacement latéral sur le processus d'identification des ambiguïtés de mesure d'axe à vue exposé ci-dessus se pose en terme d'incertitude angulaire et non de déplacement absolu. Cet impact peut donc être significativement réduit voire annulé en éloignant suffisamment le véhicule compagnon du véhicule hôte, si cela reste compatible des contraintes liées à la mission.

L'invention n'est pas limitée à une configuration à deux engins spatiaux mais s'applique à des configurations comportant un nombre d'engins spatiaux supérieur à deux. En effet, à partir du moment où N engins compagnons sont en visibilité du triplet d'antennes de l'engin hôte, c'est à dire se situent dans le demi-espace défini par le triplet d'antennes, alors les étapes du procédé de détermination de la position angulaire relative peuvent être réalisées pour tous ces N engins compagnons en considérant l'engin hôte et chaque engin compagnon par couples. Dans ce cas une première rotation, unique, du véhicule hôte conduit à une estimation approximative de la position relative des N engins compagnons dans le repère lié au véhicule hôte. Une stratégie optimisant le nombre de rotations et / ou d'alignements intermédiaires avec chaque engin compagnon complète le processus de détermination non-ambiguë de la position de chaque engin compagnon. Concernant ce dernier point, en fonction de l'éloignement relatif des différents engins spatiaux, des spécifications de précision souhaitée ou des spécifications de la fréquence du signal choisie, il est possible d'omettre les manœuvres concernant l'alignement des engins hôte et compagnon et la deuxième rotation de l'engin hôte. Par exemple en bande K, une solution angulaire même biaisée de quelques longueurs d'onde de porteuse peut en général fournir un positionnement suffisamment précis, contrairement à la bande S.

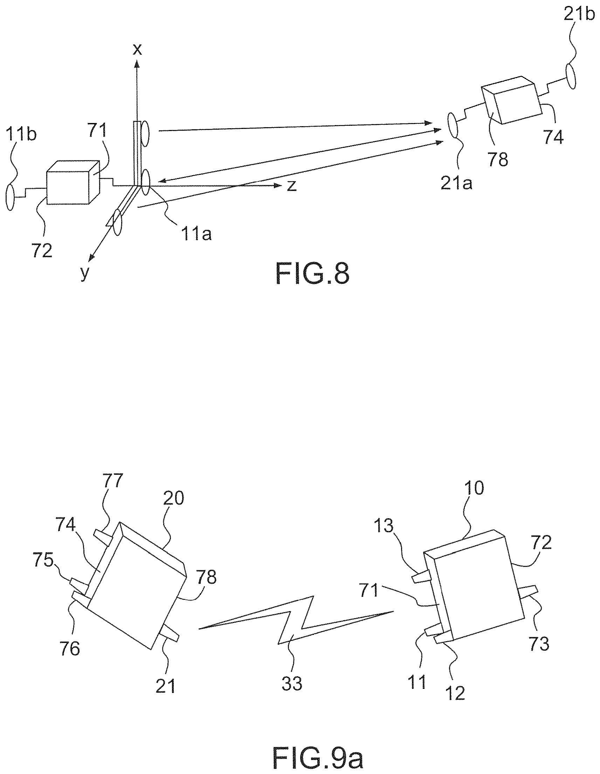

Le nombre d'antennes placées sur chaque engin hôte ou compagnon, peut être supérieur à ce qui est explicitement représenté sur la figure 1. En particulier, pour que la réception puisse être possible quelle que soit l'orientation des engins spatiaux et éviter les situations d'aveuglement pour lesquelles aucune antenne d'un engin spatial n'est capable de recevoir le signal, il est possible, pour chaque engin hôte et compagnon, d'utiliser deux antennes d'émission et de réception 11a, 11b, 21a, 21b par engin au lieu d'une seule. Dans ce cas, les deux antennes d'émission et de réception peuvent de préférence, être placées sur deux faces opposées de chaque engin, comme représenté par exemple sur le mode de réalisation de la figure 8.

La présence d'un seul engin hôte 10 comportant un triplet d'antennes 11, 12, 13 est suffisant pour assurer le positionnement de tous les engins spatiaux d'une formation dans le repère lié à l'engin hôte. Cependant, pour obtenir une redondance des mesures ou améliorer l'autonomie des engins spatiaux, il est possible d'équiper chaque engin de la formation d'un triplet d'antennes similaires à celui de l'engin hôte comme représenté par exemple sur la figure 9a où les deux engins spatiaux sont équipés d'un triplet d'antennes sur une première face et d'une antenne Rx/Tx sur une deuxième face opposée, selon un autre mode particulier de réalisation de l'invention. Dans ce cas, l'architecture de tous les engins est identique à celle d'un engin hôte et le dispositif de traitement 14 inclut en outre un module de mesure, permettant à chaque engin de pouvoir assurer le rôle de l'engin hôte ou de l'engin compagnon selon les besoins. Les deux engins spatiaux sont alors interchangeables et peuvent devenir l'engin portant le repère de référence de la formation. Lorsque la formation est complexe, c'est-à-dire lorsque le nombre d'engins spatiaux est supérieur ou égal à trois, les différentes antennes des engins de la formation permettent alors de maintenir le lien radiofréquence 33 de localisation et de communication entre les différents engins quel que soit leur positionnement relatif.

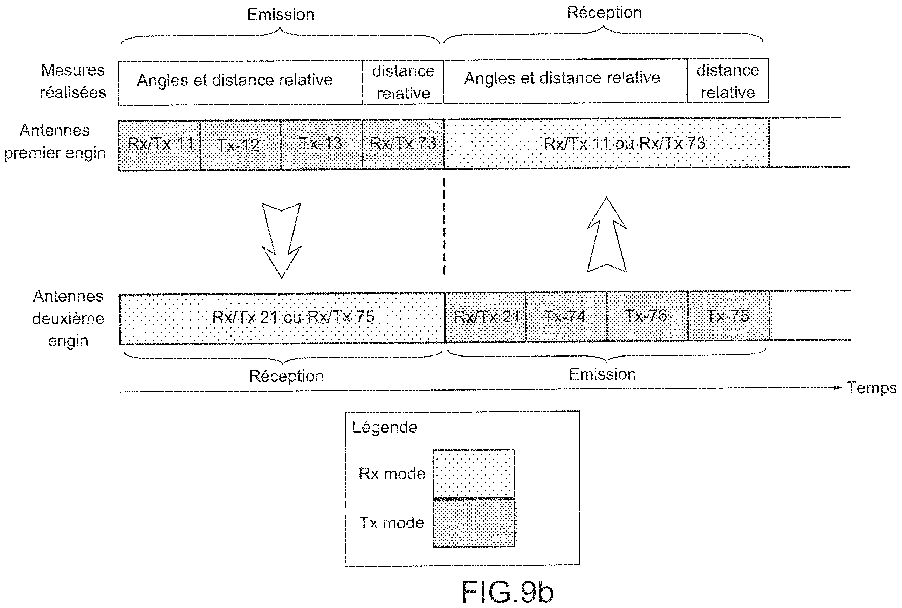

Sur la figure 9b, est représenté un graphe illustrant un exemple de trame TDMA qui peut être utilisée pour émettre et recevoir des signaux entre deux engins identiques comportant chacun un triplet d'antennes sur une première face et une antenne d'émission et de réception sur une deuxième face opposée à la première face, conformément à une variante de réalisation de l'invention. Le triplet d'antennes monté sur la première face 71 du premier engin 10 est constitué d'une antenne Rx/Tx 11 fonctionnant à l'émission et à la réception et de deux antennes Tx 12, 13 fonctionnant à l'émission seulement. En outre, le premier engin 10 comporte une antenne d'émission et de réception 73 montée sur la deuxième face 72 opposée à la première face 71. Le triplet d'antennes monté sur la première face 74 du deuxième engin 20 est constitué d'une antenne Rx/Tx 75 fonctionnant à l'émission et à la réception et de deux antennes Tx 76, 77 fonctionnant à l'émission seulement. En outre, le deuxième engin 20 comporte une antenne d'émission et de réception 21 montée sur la deuxième face 78 opposée à la première face 74. Seules les antennes pointées en direction des antennes d'un autre engin peuvent communiquer entre elles. Sur la figure 7, seules les antennes Rx/Tx 21 montées sur la face 78 du deuxième engin 20 et le triplet d'antennes Rx/Tx 11, Tx 12, Tx 13 monté sur la face 71 du premier engin 10 sont capables de communiquer par l'intermédiaire du lien de communication inter-engins 33. En outre, chaque engin comporte une architecture correspondant à celle d'un engin hôte et est capable de traiter des mesures réalisées et transmises par l'autre engin pour en extraire une estimation de la position angulaire relative entre les deux engins. Les deux engins peuvent donc fonctionner comme engin hôte lorsque l'orientation de leur triplet d'antennes est pointée vers le lien de communication inter-engins 33 ou comme engin compagnon. Les signaux émis par des antennes pointées dans des directions opposées au lien de communication inter-engins 33 ne peuvent pas être reçus par un autre engin. Dans l'exemple de la figure 9a, le triplet d'antennes opérationnel est le triplet 11, 12, 13 placé sur le premier engin 10. C'est donc le premier engin qui est capable de traiter des mesures réalisées par le deuxième engin 20 et d'estimer la position angulaire relative entre les deux engins. Cependant, dans le cas d'un vol en formation par exemple, le triplet d'antennes du deuxième engin 20 peut être opérationnel par rapport à un troisième engin, non représenté, de la formation et être un engin hôte par rapport à ce troisième engin.

La trame TDMA est constituée de plusieurs fenêtres temporelles successives, chaque fenêtre temporelle étant dédiée à l'émission ou à la réception de signaux sur une antenne particulière du premier engin 10 ou sur une antenne du deuxième engin 20. Les signaux émis par chaque engin à tour de rôle comportent des mesures et des données modulées par une porteuse. Ces signaux émis permettent de transmettre des données entre les engins et de faire des mesures d'angles et de distance relative entre les engins. La première ligne du graphe de la figure 9b indique les mesures qui peuvent être réalisées pendant les différentes fenêtres temporelles de la trame TDMA. La deuxième ligne du graphe indique les antennes actives du premier engin pendant chaque fenêtre temporelle. La troisième ligne du graphe indique les antennes actives du deuxième engin 20 pendant chaque fenêtre temporelle.

Lorsqu'un engin émet un signal, tous les autres engins sont en mode réception et écoutent le signal transmis. Pour que le niveau de puissance de réception soit suffisant, il est nécessaire que les antennes de réception des engins qui écoutent soient correctement orientées par rapport aux antennes de l'engin qui émet. Cela dépend donc de l'orientation relative des différents engins. Un dispositif de mesure de puissance peut être placé à bord de chaque engin pour sélectionner, en temps réel, la meilleure antenne de réception en fonction des niveaux de puissance estimés sur chaque antenne. Les mesures de puissance nécessaires à la sélection dynamique de l'antenne de réception sont réalisées de manière continue, en suivant la trame TDMA, en parallèle des autres mesures.

La première moitié de la trame TDMA correspond à la période de temps allouée au premier engin 10 pour l'émission. Cette période de temps comporte quatre fenêtres temporelles respectivement attribuées aux quatre antennes Rx/Tx 11, Tx 12, Tx 13, Rx/Tx 73 du premier engin 10 qui émettent à tour de rôle selon un ordre préétabli et a priori non modifiable. Pendant cette période, les antennes Rx/Tx 21 ou Rx/Tx 75 du deuxième engin 20 écoutent et l'antenne Rx/Tx 21 ou Rx/Tx 75 dont la puissance est la plus forte fait des mesures. La détermination de l'antenne du deuxième engin 20 ayant la plus forte puissance est réalisée par le premier engin 10. Pour cela, en réception, le premier engin 10 réalise la mesure de puissance sur les signaux émis par les antennes du deuxième engin 20, puis retransmet les mesures de puissance réalisées sur le lien bidirectionnel 33 de transmission des données. En réception le deuxième engin 20 sélectionne l'antenne Rx/Tx qui a généré la plus grande puissance lorsqu'elle était en émission. Sur la figure 7, c'est l'antenne Rx/Tx 21 du deuxième engin 20 qui aura le niveau de puissance le plus élevé et dont les mesures seront exploitées. En outre, pendant la période d'émission du premier engin, le premier engin exploite les mesures qui lui ont été transmises par le deuxième engin lors d'une fenêtre temporelle précédente pendant laquelle il écoutait et détermine sa position angulaire par rapport au deuxième engin et la distance qui le sépare de ce deuxième engin.

La deuxième moitié de la trame TDMA correspond à la période de temps allouée au deuxième engin 20 pour l'émission. Cette période de temps comporte quatre fenêtres temporelles respectivement attribuées aux quatre antennes Rx/Tx 21, Tx 74, Tx 76, Rx/Tx 75 du deuxième engin 20 qui émettent à tour de rôle selon un ordre préétabli et a priori non modifiable. Pendant cette période, les antennes Rx/Tx 11 et Rx/Tx 73 du premier engin 10 écoutent et l'antenne Rx/Tx 11 ou Rx/Tx 73 dont la puissance de réception est la plus forte fait des mesures. Sur la figure 7, seule l'antenne Rx/Tx 21 est correctement orientée pour que le signal qu'elle émet soit reçu par le premier engin 10. Par conséquent le premier engin ne peut pas faire des mesures de différences de marche à partir du signal transmis par le deuxième engin 20. Cependant, avec la réception d'un seul signal, il est possible de produire des mesures de distance relative (en anglais : ranging) entre les deux engins à partir de la demi-somme des pseudo-distances échangées sur le lien bidirectionnel 33 de transmission des données. La demi-différence des mêmes mesures de distance relative génère le biais inter-horloges, nécessaire pour la datation en temps local de l'engin hôte, des mesures de différence de marche réalisées par l'engin compagnon.

A titre d'exemple non limitatif, pour une durée de trame TDMA de 80ms, il est possible d'allouer 10ms à chaque fenêtre temporelle d'émission, pour chacun des deux engins.

L'invention peut s'appliquer à tout ensemble comportant au moins deux engins spatiaux dont la position relative doit être déterminée.

Les deux engins spatiaux peuvent faire partie d'une pluralité d'engins spatiaux, tels que des satellites, en vol en formation. Dans ce cas, le positionnement relatif entre les engins de la formation peut être réalisé de façon identique pour tous les engins de la formation pris deux à deux par couple d'engins spatiaux, la trame TDMA comportant alors des fenêtres temporelles additionnelles allouées aux antennes des autres engins de la formation. Pour N engins spatiaux équipés de M antennes chacun, la trame comportera NxM fenêtres temporelles d'émission. Par exemple, pour une formation de trois engins comportant chacun quatre antennes, la trame TDMA doit comporter 12 fenêtres temporelles d'émission. Si l'on alloue 10 ms à chaque antenne, la durée globale de la trame vaut alors 120 ms.

Les engins spatiaux peuvent aussi être constitués d'un véhicule cargo et d'une station spatiale, le véhicule cargo souhaitant s'amarrer à la station spatiale. Dans ce cas, le véhicule cargo doit être équipé d'au moins un triplet d'antennes et la station spatiale doit posséder au moins un récepteur muni d'une antenne d'émission et de réception associée à des moyens d'émission et de réception et à des moyens de mesures permettant de faire des mesures de position relative du véhicule cargo en approche et des mesures de distance entre le véhicule cargo et la station spatiale à partir des signaux transmis par le triplet d'antennes du véhicule cargo et de retransmettre les mesures au véhicule cargo en approche.

Suivant le nombre de triplets d'antennes existant sur les différents engins, la position et l'orientation initiale des différents engins, il peut y avoir des cas où aucun triplet n'est en visibilité d'un ou de plusieurs autres engins. Grâce à l'antenne d'émission et de réception additionnelle disposée sur une face opposée au triplet d'antennes ou à des mesures antérieures du module de navigation GNC 62, il est alors possible de modifier l'orientation du ou des engins concernés afin de replacer rapidement le triplet d'antennes correspondant dans une configuration favorable.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Procédé de détermination, par couple d'engins spatiaux, de la position angulaire relative entre plusieurs engins spatiaux distants (10, 20), **caractérisé en ce qu'**il consiste :

   - à émettre (50) séquentiellement au moins trois signaux radiofréquence à partir d'un triplet d'antennes (11, 12, 13) monté sur une première face d'un premier engin spatial dit engin hôte (10), le triplet d'antennes étant constitué d'une antenne principale d'émission et de réception (11) et de deux antennes secondaires d'émission (12, 13),
   - à recevoir (51) les trois signaux radiofréquence sur une antenne d'émission et de réception (21) d'un ou de plusieurs seconds engins spatiaux dits engins compagnons (20), à mesurer (52) à bord de chaque engin compagnon (20), des différences de marche entre le signal issu de l'antenne principale (11) et les signaux issus de chacune des deux antennes secondaires (12, 13), puis à transmettre par chaque engin compagnon (20) à l'engin hôte (10) un signal radiofréquence contenant les mesures réalisées,
   - à recevoir (53) et à traiter (54) à bord de l'engin hôte (10), le signal radiofréquence contenant les mesures transmis par chaque engin compagnon (20) et à en déduire la position angulaire (55) relative de chaque engin compagnon (20) dans un repère lié à l'engin hôte (10).

2. Procédé de détermination, par couple d'engins spatiaux, de la position angulaire relative entre plusieurs engins spatiaux selon la revendication 1, **caractérisé en ce que** tous les signaux radiofréquence sont émis ou reçus séquentiellement par les différentes antennes des engins spatiaux (10, 20), par l'intermédiaire d'un lien radiofréquence bidirectionnel (33) de localisation et de communication inter-engins, selon une trame TDMA constituée de plusieurs fenêtres temporelles successives respectivement allouées à chaque antenne (11, 12, 13) de l'engin hôte (10) et à chaque antenne (21) des engins compagnons (20) pour l'émission ou la réception de signaux radiofréquence.

3. Procédé de détermination, par couple d'engins spatiaux, de la position angulaire relative entre plusieurs engins spatiaux selon la revendication 2, **caractérisé en ce que** tous les signaux radiofréquence émis ou reçus sont modulés par une porteuse ayant une fréquence F1 identique.

4. Procédé de détermination, par couple d'engins spatiaux, de la position angulaire relative entre plusieurs engins spatiaux selon la revendication 3, **caractérisé en ce qu'**il comporte en outre une étape additionnelle destinée à réduire une ambiguïté de phase de la porteuse, consistant :

   - sans alignement préalable des deux engins spatiaux, à réaliser une première rotation (40) de l'engin hôte (10) autour d'un axe Z parallèle à un axe de pointage des antennes (11, 12, 13) du triplet, la première rotation (40) étant réalisée dans un premier sens et ayant un angle de rotation de valeur quelconque prédéterminée,
   - puis à faire l'acquisition (52) de mesures de différences de marche, à différents instants de mesure successifs, pendant toute la durée de la rotation et à calculer (56) des variations de différences de marche entre les instants de mesure successifs,
   - aux mêmes instants de mesure successifs, à mesurer (59) des variations d'attitude inertielle (58) de l'engin hôte,
   - à partir des variations de différences de marche et des variations d'attitude inertielle mesurées, en déduire (60), pour chaque couple d'engins spatiaux, une estimation de la position angulaire relative entre les engins spatiaux,
   - puis à aligner (63), par couple, les engins spatiaux hôte et compagnon et à réaliser une deuxième rotation de l'engin hôte (10) autour de l'axe Z, la deuxième rotation étant réalisée dans un second sens opposé au premier sens et ayant un angle de rotation de valeur quasi-identique à la première rotation et à réaliser (55) pour chaque couple d'engins spatiaux, une nouvelle mesure non ambiguë de la position angulaire relative entre les engins spatiaux.

5. Système de détermination, par couple d'engins spatiaux, de la position angulaire relative entre plusieurs engins spatiaux distants pour la mise en œuvre du procédé selon l'une des revendications précédentes, le système comportant au moins un premier engin spatial (10) dit engin hôte et un deuxième engin spatial (20) dit engin compagnon, **caractérisé en ce que** :

   - l'engin hôte (10) comporte au moins un triplet d'antennes (11, 12, 13) monté sur une première face, le triplet d'antennes étant constitué d'une antenne principale d'émission et de réception (11) et de deux antennes secondaires d'émission (12, 13), une chaîne d'émission (16) pouvant être successivement couplée à l'émission, à chaque antenne du triplet d'antennes (11, 12, 13) et une chaîne de réception (17) pouvant être couplée à la réception, à l'antenne principale (11), un commutateur radiofréquence (19) apte à sélectionner séquentiellement les différentes antennes du triplet et un dispositif de traitement (14) destiné à déterminer une position angulaire relative entre l'engin hôte et l'engin compagnon à partir de mesures de différences de marche transmises par l'engin compagnon (20),

- l'engin compagnon (20) comporte au moins une antenne d'émission et de réception (21) placée sur une première face, une chaîne d'émission (23) et une seule chaîne de réception (24) respectivement couplées à l'antenne d'émission et de réception (21) et un dispositif de mesure (22) destiné à mesurer des différences de marche entre un signal radiofréquence reçu de l'antenne principale (11) et des signaux radiofréquence reçus de chacune des deux antennes secondaires (12, 13) du triplet d'antennes de l'engin hôte (10).

6. Système de détermination selon la revendication 5, **caractérisé en ce que** l'engin hôte (10) comporte en outre un dispositif de mesure (59) des variations d'attitude de l'engin hôte.

7. Système de détermination selon la revendication 5, **caractérisé en ce que** chaque engin spatial hôte et compagnon (10, 20) comporte en outre une deuxième antenne d'émission et de réception (11b, 21b) placée sur une deuxième face (72, 74) à l'opposé de la première face (71, 78) de l'engin spatial correspondant.

8. Système de détermination selon la revendication 7, **caractérisé en ce que** chaque engin spatial hôte et compagnon (10, 20) comporte un triplet d'antennes (11, 12, 13), (75, 76, 77), un dispositif de traitement (14) et un dispositif de mesure (22) de différence de marche.

9. Système de détermination selon la revendication 7, **caractérisé en ce qu'**il comporte en outre, à bord de chaque engin spatial hôte et compagnon (10, 20), des moyens de mesure du niveau de puissance des signaux reçus par chaque antenne de réception et des moyens de sélection de l'antenne de réception ayant le plus grand niveau de puissance.

## Patentansprüche

1. Verfahren zur Bestimmung, für Raumflugkörperpaare, der relativen Winkelposition zwischen mehreren entfernten Raumflugkörpern (10, 20), **dadurch gekennzeichnet, dass** es darin besteht:

- sequenziell mindestens drei Funkfrequenzsignale zu senden (50), von einem Antennen-Tripel (11, 12, 13), welches an einer ersten Seite eines ersten Raumflugkörpers, genannt Wirts-Flugkörper (10) montiert ist, wobei das Antennen-Tripel aus einer Haupt-Sende- und Empfangsantenne (11) und aus zwei sekundären Sendeantennen (12, 13) gebildet ist,

- die drei Funkfrequenzsignale an einer Sende- und Empfangsantenne (21) eines oder mehrerer Raumflugkörper, genannt Begleiter-Flugkörper (20) zu empfangen (51), an Bord eines jeden Begleiter-Flugkörpers (20) Gangunterschiede zwischen dem der Hauptantenne (11) entstammenden Signal und den aus jeder der beiden Sekundärantennen (12, 13) entstammenden Signale zu messen (52), und anschließend durch jeden Begleiter-Flugkörper (20) an den Wirts-Flugkörper (10) ein Funkfrequenzsignal zu übertragen, welches die vorgenommenen Messungen enthält,

- an Bord des Wirts-Flugkörpers (10), das Funkfrequenzsignal zu empfangen (53) und zu verarbeiten (54), welches die durch jeden Begleiter-Flugkörper (20) übertragenen Messungen enthält und hieraus die relative Winkelposition (55) eines jeden Begleiter-Flugkörpers (20) in einem mit dem Wirts-Flugkörper (10) verbundenen Koordinatensystem abzuleiten.

2. Verfahren zur Bestimmung, für Raumflugkörperpaare, der relativen Winkelposition zwischen mehreren Raumflugkörpern nach Anspruch 1, **dadurch gekennzeichnet, dass** alle Funkfrequenzsignale sequenziell durch die unterschiedlichen Antennen der Raumflugkörper (10, 20) in Vermittlung einer bidirektionalen Funkfrequenzverbindung (33) zur Lokalisierung und Kommunikation zwischen Flugkörpern gesendet oder empfangen werden, entsprechend einem TDMA-Rahmen, welcher aus mehreren aufeinanderfolgenden Zeitfenstern gebildet ist, welche einer jeden Antenne (11, 12, 13) des Wirts-Flugkörpers (10) und einer jeden Antenne (21) der Begleiter-Flugkörper (20) zum Senden oder Empfangen von Funkfrequenzsignalen zugewiesen sind.

3. Verfahren zur Bestimmung, für Raumflugkörperpaare, der relativen Winkelposition zwischen mehreren Raumflugkörpern nach Anspruch 2, **dadurch gekennzeichnet, dass** alle gesendeten oder empfangenen Funkfrequenzsignale durch ein Trägersignal moduliert werden, welches eine identische Frequenz F1 aufweist.

4. Verfahren zur Bestimmung, für Raumflugkörperpaare, der relativen Winkelposition zwischen mehreren Raumflugkörpern nach Anspruch 3, **dadurch gekennzeichnet, dass** es einen zusätzlichen Schritt umfasst, welcher dazu bestimmt ist, eine Phasenmehrdeutigkeit des Trägersignals zu reduzieren, darin bestehend:

- ohne vorheriges Ausfluchten zweier Raumflugkörper, eine erste Drehung (40) des Wirts-Flugkörpers (10) um eine Achse Z vorzunehmen, welche parallel zu einer Peilungsachse der Antennen (11, 12, 13) des Tripels ist, wobei die erste Drehung (40) in eine erste Richtung erfolgt und einen Drehwinkel mit einem beliebigen vorbestimmten Wert aufweist,
- und anschließend Messungen von Gangdifferenzen zu erfassen (52), zu unterschiedlichen aufeinanderfolgenden Messzeitpunkten, über die gesamte Dauer der Drehung, und Gangdifferenz-Variationen zwischen den aufeinanderfolgenden Messzeitpunkten zu berechnen (56),
- zu den gleichen aufeinanderfolgenden Messzeitpunkten, Variationen der Trägheitsfluglage (58) des Wirts-Flugkörpers zu messen (59),
- anhand der Gangdifferenz-Variationen und der Variationen der Trägheitsfluglage, hieraus Ableiten (60), für jedes Paar von Raumflugkörpern, einer Schätzung der relativen Winkelposition zwischen den Raumflugkörpern,
- und anschließend den Wirts-Flugkörper und den Begleiter-Flugkörper paarweise auszufluchten (63), und eine zweite Drehung des Wirts-Flugkörpers (10) um die Achse Z vorzunehmen, wobei die zweite Drehung in eine zweite, der ersten Richtung entgegengesetzte Richtung vorgenommen wird und einen Drehwinkel aufweist, dessen Wert nahezu identisch mit der ersten Drehung ist, und für jedes Paar von Raumflugkörpern eine neue, nicht mehrdeutige Messung der relativen Winkelposition zwischen den Raumflugkörpern vorzunehmen (55).

5. Verfahren zur Bestimmung, für Raumflugkörperpaare, der relativen Winkelposition zwischen mehreren entfernten Raumflugkörpern zur Umsetzung des Verfahrens nach einem der vorhergehenden Ansprüche, wobei das System mindestens einen ersten Raumflugkörper (10) umfasst, genannt Wirts-Flugkörper, und einen zweiten Raumflugkörper (20), genannt Begleiter-Flugkörpern, **dadurch gekennzeichnet, dass**:

- der Wirts-Flugkörper (10) mindestens ein Antennen-Tripel (11, 12, 13) umfasst, welches an einer ersten Seite montiert ist, wobei das Antennen-Tripel aus einer Haupt-Sende- und Empfangsantenne (11) und aus zwei sekundären Sendeantennen (12, 13) gebildet ist, wobei eine Sendekette (16) nacheinander an die Sendung gekoppelt sein kann, an jeder Antenne des Antennen-Tripels (11, 12, 13), und eine Empfangskette (17) an den Empfang gekoppelt sein kann, an der Hauptantenne (11), einen Funkfrequenz-Umschalter (19), welcher in der Lage ist, sequenziell die unterschiedlichen Antennen des Tripels auszuwählen und eine Verarbeitungsvorrichtung (14), welche dazu bestimmt ist, eine relative Winkelposition zwischen dem Wirts-Flugkörper und dem Begleiter-Flugkörper anhand von Gang Differenzmessungen zu bestimmen, welche durch den Begleiter-Flugkörper (20) übertragen wurden,
- der Begleiter-Flugkörper (20) mindestens eine Sende- und Empfangsantenne (21) umfasst, welche an einer ersten Seite platziert ist, eine Sendekette (23) und eine einzige Empfangskette (24), welche jeweils mit der Sende- und Empfangsantenne (21) gekoppelt sind und eine Messvorrichtung (22), welche dazu bestimmt ist, Gangdifferenzen zwischen einem empfangenen Funkfrequenzsignal der Hauptantenne (11) und empfangenen Funkfrequenzsignalen einer jeden der beiden Sekundärantennen (12, 13) das Antennen-Tripels des Wirts-Flugkörpers (10) zu messen.

6. System zur Bestimmung nach Anspruch 5, **dadurch gekennzeichnet, dass** der Wirts-Flugkörper (10) ferner eine Messvorrichtung (59) der Fluglagenvariationen des Wirts-Flugkörpers umfasst.

7. System zur Bestimmung nach Anspruch 5, **dadurch gekennzeichnet, dass** jeder Wirts- und Begleiter-Flugkörper (10, 20) ferner eine zweite Sende- und Empfangsantenne (11b, 21b) umfasst, welche an einer zweiten Seite (72, 74) platziert ist, welche gegenüber der ersten Seite (71, 78) des entsprechenden Raumflugkörpers liegt.

8. System zur Bestimmung nach Anspruch 7, **dadurch gekennzeichnet, dass** jeder Wirts- und Begleiter-Flugkörper (10, 20) ein Antennen-Tripel (11, 12, 13), (75, 76, 77), eine Verarbeitungsvorrichtung (14) und eine Messvorrichtung (22) der Gangdifferenz umfasst.

9. System zur Bestimmung nach Anspruch 7, **dadurch gekennzeichnet, dass** es ferner an Bord eines jeden Wirts- und Begleiter-Flugkörpers (10, 20) Messmittel des Leistungspegels der durch jede Empfangsantenne empfangenen Signale und Mittel zur Auswahl der Empfangsantenne, welche den höchsten Leistungspegel aufweist, umfasst.

EP 2 902 797 B1

**Claims**

1. Method for determining, by pairs of spacecraft, the relative angular position between multiple remote spacecraft (10, 20), **characterized in that** it consists in:

   - sequentially transmitting (50) at least three radiofrequency signals from a triplet of antennas (11, 12, 13) mounted on a first face of a first spacecraft, called host craft (10), the triplet of antennas consisting of a main transmitting and receiving antenna (11) and two secondary transmitting antennas (12, 13),
   - receiving (51) the three radiofrequency signals on a transmitting and receiving antenna (21) of one or more second spacecraft, called companion craft (20), measuring (52), onboard each companion craft (20), path differences between the signal from the main antenna (11) and the signals from each of the two secondary antennas (12, 13), then transmitting, by each companion craft (20) to the host craft (10), a radiofrequency signal containing the measurements carried out,
   - receiving (53) and processing (54), onboard the host craft (10), the radiofrequency signal containing the measurements transmitted by each companion craft (20) and in deducing therefrom the relative angular position (55) of each companion craft (20) in a reference frame linked to the host craft (10).

2. Method for determining, by pairs of spacecraft, the relative angular position between multiple spacecraft according to claim 1, **characterized in that** all the radiofrequency signals are transmitted or received sequentially by the different antennas of the spacecraft (10, 20), via a two-way inter-craft location and communication radiofrequency link (33), according to a TDMA frame consisting of multiple successive time windows respectively allocated to each antenna (11, 12, 13) of the host craft (10) and to each antenna (21) of the companion craft (20) for the transmission or the reception of radiofrequency signals.

3. Method for determining, by pairs of spacecraft, the relative angular position between multiple spacecraft according to claim 2, **characterized in that** all the radiofrequency signals transmitted or received are modulated by an carrier with an identical frequency F1.

4. Method for determining, by pairs of spacecraft, the relative angular position between multiple spacecraft according to claim 3, **characterized in that** it further has an additional step intended to reduce a carrier phase ambiguity, consisting in:

   - without prior alignment of the two spacecraft, performing a first rotation (40) of the host craft (10) about an axis Z parallel to a pointing axis of the antennas (11, 12, 13) of the triplet, the first rotation (40) being performed in a first direction and having a rotation angle of any predetermined value,
   - then acquiring (52) measurements of path differences, at different successive measurement instants, throughout the duration of the rotation and computing (56) path difference variations between the successive measurement instants,
   - at the same successive measurement instants, measuring (59) variations of inertial attitude (58) of the host craft,
   - from the measured path difference variations and inertial attitude variations, deducing (60), for each pair of spacecraft, an estimation of the relative angular position between the spacecraft,
   - then aligning (63), for each pair, the host and companion spacecraft and performing a second rotation of the host craft (10) about the axis Z, the second rotation being performed in a second direction opposite the first direction and having a rotation angle of a value almost identical to the first rotation and performing (55), for each pair of spacecraft, a new unambiguous measurement of the relative angular position between the spacecraft.

5. System for determining, by pairs of spacecraft, the relative angular position between multiple remote spacecraft for the implementation of the method according to one of the preceding claims, the system having at least a first spacecraft (10), called host craft, and a second spacecraft (20), called companion craft, **characterized in that**:

   - the host craft (10) has at least a triplet of antennas (11, 12, 13) mounted on a first face, the triplet of antennas consisting of a main transmitting and receiving antenna (11) and two secondary transmitting antennas (12, 13), a transmission chain (16) that can be successively coupled, in transmission, to each antenna of the triplet of antennas (11, 12, 13) and a reception chain (17) that can be coupled, in reception, to the main antenna (11), a radiofrequency switch (19) suitable for sequentially selecting the different antennas of the triplet and a processing device (14) intended to determine a relative angular position between the host craft and the companion craft from measurements of path differences transmitted by the companion craft (20),
   - the companion craft (20) has at least a transmitting and receiving antenna (21) placed on a first face, a transmission chain (23) and a single reception chain (24) respectively coupled to the transmitting and receiving antenna (21) and a measurement device (22) intended to measure path differences between a radiofrequency signal received from the main antenna (11) and radiofrequency signals received from each of the two secondary antennas (12, 13) of the triplet of antennas of the host craft (10).

6. Determination system according to claim 5, **characterized in that** the host craft (10) further has a device (59) for measuring attitude variations of the host craft.

7. Determination system according to claim 5, **characterized in that** each host and companion spacecraft (10, 20) further has a second transmitting and receiving antenna (11b, 21b) placed on a second face (72, 74) opposite the first face (71, 78) of the corresponding spacecraft.

8. Determination system according to claim 7, **characterized in that** each host and companion spacecraft (10, 20) has a triplet of antennas (11, 12, 13), (75, 76, 77), a processing device (14) and a device (22) for measuring path differences.

9. Determination system according to claim 7, **characterized in that** it further has, onboard each host and companion spacecraft (10, 20), means for measuring the power level of the signals received by each receiving antenna and means for selecting the receiving antenna that has the greatest power level.

FIG.1

FIG.2

FIG.3

FIG.4

FIG.5a

FIG.5b

FIG.5c

FIG.6

FIG.7a

Engin hôte — 10

t = 0
première rotation
premier sens — 40

Engin compagnon — 20

Emission — 50

Mesures
ddm1, ddm2 — 52

t = t + 1

Réception — 53

Senseur
d'attitude
inertielle — 59

Variations
Δ ddm1 et Δ ddm2 — 56

14

Variation
attitude — 58

Estimation position
angulaire relative — 60

Alignement et deuxième rotation
deuxième sens — 63

Position angulaire — 55

FIG.7b

20

FIG.8

FIG.9a

| | Emission | | Réception |
|---|---|---|---|

Mesures réalisées

| Angles et distance relative | distance relative | Angles et distance relative | distance relative |
|---|---|---|---|

Antennes premier engin

| Rx/Tx 11 | Tx-12 | Tx-13 | Rx/Tx 73 | Rx/Tx 11 ou Rx/Tx 73 |
|---|---|---|---|---|

Antennes deuxième engin

| Rx/Tx 21 ou Rx/Tx 75 | Rx/Tx 21 | Tx-74 | Tx-76 | Tx-75 |
|---|---|---|---|---|

| Réception | Emission |
|---|---|

Temps

Légende

Rx mode

Tx mode

FIG.9b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1813957 A
- US 6866232 B
- US 6072433 A

**Littérature non-brevet citée dans la description**

- **THEVENET J-B et al.** A generic Radio-Frequency Subsystem for high-altitude Formation-Flying missions. *3RD International Symposium on Formation Flying, Missions and Technologies,* 23 Avril 2008
- Low-cost relative navigation sensing : GNSS-like devices hosted on deployed tethers. **COLMENAREJO P et al.** ASTA ASTRONAUTICA. PERGAMON PRESS, 01 Octobre 2006, vol. 59, 873-881